# EUROPEAN PATENT APPLICATION

(11) **EP 3 650 451 A1**
(43) Date of publication of application: **13.05.2020**
(21) Application number: 18827960.8
(22) Date of filing: 04.07.2018
(51) Int. Cl.: C07F 5/02, C09B 57/00, C09K 11/07, G03C 1/73

(54) **COMPOUNDS AND THEIR USES AS FLUORESCENT PROBES**

(30) Priority: 04.07.2017 ES 201730885
(71) Applicant: Consejo Superior de Investigaciones Cientificas, 28006 Madrid (ES); Fundación Para El Fomento En Asturias De La Investigacion Aplicada Y La Tecnologia (FICYT), 33007 Oviedo (ES); Fundación Para La Investigación E Innovación Biosanitaria En El Principado De Asturias (FINBA), 33011 Oviedo (ES)
(72) Inventor: CHIARA ROMERO, Jose Luís, 28006 Madrid (ES); GARCÍA-MORENO GONZALO, Inmaculada, 28006 Madrid (ES); BLÁZQUEZ MORALEJA, Alberto, 28006 Madrid (ES); CHIARA ROMERO, Maria Dolores, 33007 Oviedo (ES); SÁENZ DE SANTA MARÍA FERNÁNDEZ, Inés, 33011 Oviedo (ES)
(74) Representative: Pons
(86) International application number: PCT/ES2018/070477
(87) International publication number: WO 2019/008209

(57) **Abstract**

Organic dyes based on F-BODIPY derivatives and carnitine, method of producing same and their use for specific fluorescent labeling or tagging of mitochondria in live cells.

## Description

The present invention relates to compounds based on F-BODIPY derivatives and carnitine as organic dyes. Additionally, it relates to the method of obtainment and application thereof for specific fluorescent mitochondrial labeling in live cells. Therefore, the invention is encompassed in the field of fluorescent probes for biological labeling.

### BACKGROUND OF THE INVENTION

Mitochondria are organelles present in nearly all eukaryotic cells responsible for producing energy in the form of ATP through cellular respiration. Additionally, they are involved in the metabolism of heme groups, calcium homeostasis, the production of reactive oxygen species (ROS), inflammation, cell proliferation and apoptosis, thereby playing an essential role in the survival of the cell. These organelles also contain their own mitochondrial DNA (mtDNA), which is independent from the cell nucleus DNA. Cell mitochondria (cell chondrioma) exist in a dynamic state which is regulated by complex cell communication mechanisms, both at intra- and extracellular level, to respond to changes in the cell's energy requirements through mitochondrial fusion, fission, autophagy (mitophagy) and biogenesis processes. Damage to or deregulation of these mechanisms gives rise to numerous pathological processes, either directly, as in mitochondrial genetic diseases, or secondarily in neurodegenerative, inflammatory and cardiovascular diseases and in some metabolic syndromes (Suliman, H. B.; Piantadosi, C. A. Pharmacol. Rev. 2016, 68, 20). The existence of a relationship between the changes in cell chondrioma and aging processes has also been known for some time, either as a cause or as an effect (Harman, D. J Gerontol 1956, 11, 298; Balaban, R. S.; Nemoto, S.; Finkel, T. Cell 2005, 120, 483). Recent studies are pointing to mitochondrial metabolism as an important therapeutic target for cancer treatment (Weinberg, S. E.; Chandel, N. S. Nat. Chem. Biol. 2015, 11, 9).

Although considerable effort has been devoted to studying mitochondrial biology, we are still far from knowing the details of many of their basic functions and activities. Developing new technologies to facilitate this study is essential to understanding the complex role played by these organelles in cellular metabolism and their effects on aging and the development and possible treatment of many diseases. In comparison to traditional analytical techniques, such as colorimetric assays, fluorescent probes (Li, X.; Gao, X.; Shi, W.; Ma, H. Chem. Rev. 2014, 114, 590) are currently the most efficient and versatile molecular tools for studying biological systems due to their high degree of sensitivity, selectivity and ease of use, providing a wide range of information in real time and in a nondestructive way. For use in live cell microscopy, a fluorescent probe must ideally meet a series of basic requirements: 1) high luminescence (high quantum yield) in an aqueous medium when illuminated in the visible to near infrared range; 2) high specificity and affinity for its target cellular structure or biomolecule; 3) high chemical stability and photostability in the cell medium; 4) ability to penetrate the cell; 5) good solubility in water; and 6) low or zero toxicity.

Although a wide variety of fluorescent probes for the specific visualization of mitochondria are currently known, some commercially available such as, for example, tetramethylrhodamine ethyl ester (TMRE), 3,3'-dihexyloxacarbocyanine iodide (CiOC6(3)), MitoTracker® Red or MitoTracker® Green, none meet all the aforementioned requirements (Xu, Z.; Xu, L. Chem. Commun. 2016, 52, 1094).

A common feature of all these probes is the presence of a cationic group (ammonium or phosphonium) that promotes their incorporation into mitochondria due to the high negative potential gradient characteristic of this organelle. In addition, they are all based on xanthene or cyanine structures as a chromophoric group, both including amines in their skeleton, which significantly reduce their photostability, especially under drastic pumping conditions such as those involved in high-resolution microscopy (Alvarez, M.; Amat, F., Costela, A.,Garcia-Moreno, I., Gomez, C., Liras, M., Sastre, R. Appl. Phys. B. 2005, 80, 993*;* Cerdan, I., Enciso, E, Martin, V., Bañuelos, J., Lopez Arbeloa, I.; Costela, A., Garcia-Moreno, I. Nature Photonics, 2012, 6, 621).

Therefore, the development of new fluorescent probes as specific mitochondrial markers in live cells that can overcome the limitations of currently marketed systems for this application is of great interest.

### DESCRIPTION OF THE INVENTION

The present invention describes new fluorescent probes as specific mitochondrial markers in live cells based on a compound which comprises a F-BODIPY unit as a fluorophore group and a L-carnitine unit as a targeting group, whose system overcomes the limitations of the systems currently marketed for this application. Both units have been bonded through the boron atom of the fluorophore, which greatly simplifies the final structure and the synthesis method. By directly using a F-BODIPY as the starting product, the method is general in nature and can provide other similar probes with tunable absorption and emission frequencies in the visible spectrum depending only on the F-BODIPY used.

Live human tumor cell staining assays with the new fluorescent markers have exhibited mitochondrial selectivity shown through co-staining assays with commercial MitoTracker® Red. The efficiency and selectivity of the labeling is independent from the chromophore substitution pattern and from the assayed cell line. The new probes exhibit interesting properties with respect to commercial MitoTracker® Red. Firstly, MitoTracker® Red seems to concentrate along the edges of the mitochondria, whereas staining with the new probes is preferably located in their interior (the mitochondrial matrix). Additionally, staining intensity with the new probes increases progressively with cell incubation time, whereas the commercial dye seems to stain these organelles almost instantly. These features reveal, in the case of the new probes and as opposed to the commercial marker, the action of an active transport mechanism that actively transports them towards the interior of the mitochondria.

The methodology described in the present invention provides a new and effective synthesis protocol for developing new dyes with advanced properties to be applied as selective, stable, effective and inexpensive biomarkers.

Therefore, a first aspect of the present invention relates to a compound of general formula (I) (hereinafter, the compound of the invention): 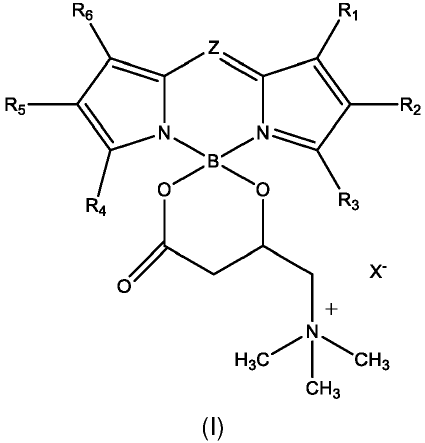 wherein:
Z is selected from a nitrogen atom (N) or a C(R₇) group;
R₁ to R₇ are each independently selected from hydrogen, substituted or non-substituted C₁-C₁₈ alkyl, substituted or non-substituted C₂-C₁₈ alkenyl, substituted or non-substituted C₂-C₁₈ alkynyl, substituted or non-substituted aryl, substituted or non-substituted heteroaryl, halogen, -OR', -COOR', -SR', -SOR', - SOOR' and -NR' R"; or every two radicals R₁ to R₇, continuous therebetween, such as for example R₁ and R₂, R₂ and R₃, R₄ and R₅ or R₅ and R₆ form a cycloalkyl, aryl or heteroaryl;
R' and R" are each selected independently from hydrogen, C₁-C₁₈ alkyl, C₂-C₁₈ alkenyl, C₂-C₁₈ alkynyl, aryl or heteroaryl; and
X⁻ is a counterion,
or any of the isomers thereof.

In a preferred embodiment, Z is C(R₇) and the compound would be the following compound of formula (II): 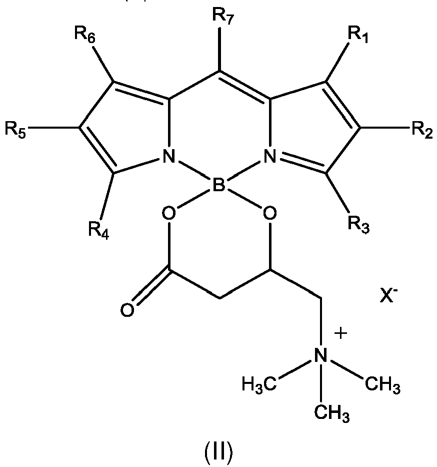 wherein R₁ to R₇ and X⁻ are those defined above.

In the present invention, the term "alkyl" refers to linear or branched saturated hydrocarbon chains having 1 to 18 carbon atoms, for example, methyl, ethyl, n-propyl, i-propyl, n-butyl, tert-butyl, sec-butyl, n-pentyl, n-hexyl, etc. Preferably, the alkyl group has between 1 and 6 carbon atoms. The alkyl groups may optionally be substituted by one or more substituents such as alkynyl, alkenyl, halo, hydroxyl, alcoxyl, carboxyl, cyan, carbonyl, acyl, alcoxycarbonyl, amine, nitro or mercaptan.

In the present invention, the term "alkenyl" refers to linear or branched unsaturated hydrocarbon chains having 2 to 18 carbon atoms, preferably 2 to 6, and containing one or more double carbon-carbon bonds and that may optionally contain a triple bond, for example, vinyl, 1-propenyl, allyl, isoprenyl, 2-butenyl, 1,3-butadienyl, etc. The alkenyl radicals may optionally be substituted by one or more substituents such as alkyl, alkynyl, halo, hydroxyl, alcoxyl, carboxyl, cyan, carbonyl, acyl, alcoxycarbonyl, amine, nitro or mercaptan.

The term "alkynyl" refers to linear or branched hydrocarbon chain radicals having 2 to 18 carbon atoms, preferably 2 to 6, and containing at least one or more triple carbon-carbon bonds and that may optionally contain a double bond, for example, ethylene, propynyl, butynyl, etc. The alkynyl radicals may optionally be substituted with one or more substituents such as alkyl, alkenyl, halo, hydroxyl, alcoxyl, carboxyl, cyan, carbonyl, acyl, alcoxycarbonyl, amine, nitro or mercaptan.

In the present invention, the term "aryl" refers to simple or multiple aromatic rings having between 5 and 18 carbon atoms in the ring part, such as, but not limited to, phenyl, naphthyl, diphenyl, indenyl, phenantryl, fluorenyl or anthracyl. Preferably, the aryl group has between 5 and 7 carbon atoms and, more preferably, the aryl group is a phenyl. The aryl radicals may optionally be substituted in any of their positions by one or more substituents or two substituents forming a cycle condensed to the aryl and are independently selected from substituents such as alkyl, alkenyl, alkynyl, O-alkyl, O, halogen, hydroxyl, amine or carboxylic acid. In a preferred embodiment, the aryl is an optionally substituted phenyl and more preferably a phenyl optionally substituted with more than one alkyl group, as defined above.

The term "heteroaryl" refers to an aryl, as defined above, containing at least one atom other than carbon, such as S, N, or O, forming part of the aromatic ring.

In the present invention, "cycloalkyl" refers to a stable monocyclic or bicyclic 3- to 10-membered radical, which is saturated or partially saturated, consisting of carbon and hydrogen atoms, such as cyclopentyl, cyclohexyl or adamantyl. The cycloalkyl radicals may optionally be substituted in any of their positions with one or more substituents or two substituents forming a cycle condensed to the cycloalkyl and are independently selected from substituents such as alkyl, alkenyl, alkynyl, O-alkyl, O, halogen, hydroxyl, amine or carboxylic acid.

In the present invention, "halogen" is understood to be a bromine, chlorine, iodine or fluorine atom.

In another preferred embodiment, R₇ is an optionally substituted aryl, more preferably, R₇ is an optionally substituted phenyl and, more preferably, phenyl substituted with C₁-C₆ alkyl, even more preferably, it is a trimethylphenyl.

In another preferred embodiment, R₂ and/or R₅ are hydrogen or C₁-C₆ alkyl, more preferably hydrogen or methyl and even more preferably hydrogen. In an even more preferred embodiment, R₂ and R₅ are hydrogen.

In another preferred embodiment, R₁, R₃, R₄ and R₆ are each independently hydrogen or C₁-C₆ alkyl, more preferably R₁, R₃, R₄ and R₆ are each independently hydrogen or methyl. More preferably R₁, R₃, R₄ and R₆ are hydrogen or methyl.

The counterion (X⁻) is any pharmaceutically acceptable anion known to the person skilled in the art and can preferably be selected from the list comprising Cl⁻, Br⁻, I⁻, F⁻, SO₄⁻, BF₄⁻, PF₄⁻, HSO₄⁻, (SO₄²⁻)_{1/2}, CF₃SO₃⁻, ClO₄⁻, and BF₄⁻, more preferably, X⁻ can be selected from a halide that can be selected from Cl⁻, Br⁻, l⁻, F⁻; SO₄⁻, BF₄⁻, PF₄⁻, HSO₄⁻ and (SO₄²⁻)_{1/2}. More preferably, X⁻ is a halide, even more preferably Cl⁻.

In the present invention, "isomer" also refers to any racemic mixture.

In an even more preferred embodiment, the compound of the invention is selected from:

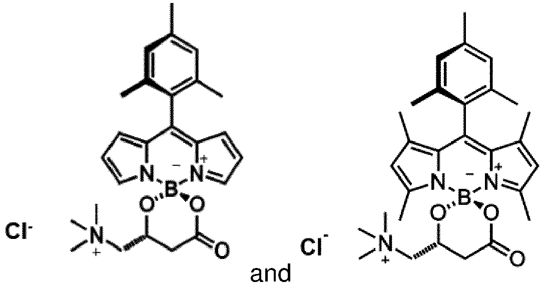

Another aspect of the present invention relates to a method for obtaining a compound of the invention which comprises the reaction between a compound of formula (III) and carnitine: 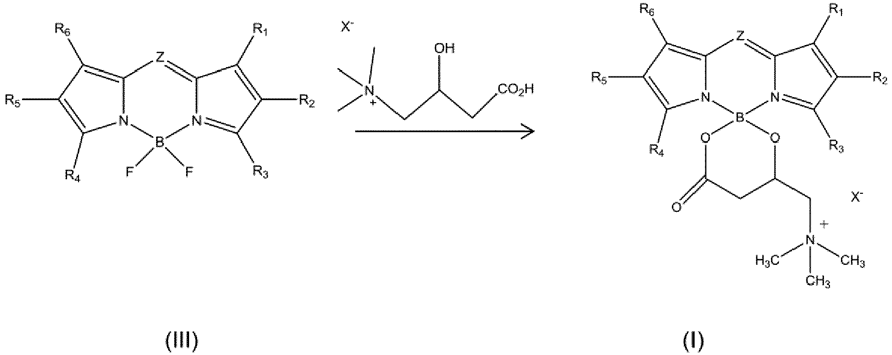 wherein Z, R₁ to R₆ and X⁻ are those defined above.

In a preferred embodiment of the method of the invention, the carnitine can be selected from L-carnitine, D-carnitine and racemic D/L-carnitine mixture, and is preferably L-carnitine.

The described reaction can be carried out in the presence of excess reagent, wherein this reagent can be selected from trimethylsilyl chloride (TMSCl), BCl₃, BBr₃, AlCl₃, AlBr₃, SnCl₄, SnBr₄, SiCl₄, SiBr₄, trimethylsilyl trifluorometylmethanesulfonate (Me₃SiOTf), triethylsilyl trifluoromethylmethanesulfonate (Et₃SiOTf) and triisopropylsilyl trifluoromethylmethanesulfonate (*i*-Pr₃SiOTf). Preferably, the reaction is carried out in the presence of excess trimethylsilyl chloride, approximately between 20-50 mol-equiv.

In another preferred embodiment of the method of the invention, the reaction is carried out in a polar aprotic solvent capable of dissolving the carnitine. The solvent can be selected from acetonitrile, dimethylformamide, dimethylacetamide, N-methylpyrrolidone, sulfolane or mixtures of this polar aprotic solvent with other less polar aprotic solvents such as, for example, but not limited to, dichloromethane, 1,2-dichloethane, tetrahydrofurane, 2-methyl tetrahydrofurane, 1,4-dioxane, 1,2-dichlorobenzene, ethyl acetate or acetone. In a preferred embodiment, the solvent is acetonitrile.

Furthermore, the solubility of the carnitine in organic solvents can be improved by changing the anion of the salt to the following anions: BF₄⁻, PF₆⁻, BPh₄⁻, p-toluenesulfonate, mesylate, trifluoromethanesulfonate, acetate, benzoate, trichloroacetate or trifluoroacetate.

In another embodiment of the present invention, the method is carried out at a temperature between 50-150ºC. In a preferred embodiment, the reaction is carried out under thermal conditions by microwave radiation.

In a preferred embodiment, the method of the invention is carried out in the presence of excess trimethylsilyl chloride in acetonitrile and under thermal conditions by microwave radiation.

Subsequent to the reaction, the compound of formula (I) obtained can be recrystallized or chromatographically purified, after evaporating the reaction mixture at low pressure.

Another aspect of the present invention relates to the use of the compound of the invention as a fluorescent marker or probe. More preferably for cell labeling and even more preferably for specific mitochondrial cell labeling, more preferably of live cells, and even more preferably in live mammal cells, preferably human. The cells to be marked will preferably be tumor cells.

Another aspect of the present invention relates to the use of the compound of the invention for manufacturing markers for diagnosing mitochondrial diseases. These diseases can be selected from carnitine-acylcarnitine translocase deficiency, childhood metabolic imbalance, childhood cardiomyopathy, adult fatigability, metabolic disorders and carnitine transport, in addition to diseases such as cancer, type-2 diabetes, neurological diseases, such as for example Parkinson's disease and cardiovascular diseases, such as for example atherosclerosis.

Throughout the description and the claims, the word "comprises" and its variants do not intend to exclude other technical features, additives, components or steps. For persons skilled in the art, other objects, advantages and features of the invention may be inferred from both the description and the embodiment of the invention. The following examples and figures are provided by way of example and are not intended to limit the present invention.

### DESCRIPTION OF THE FIGURES

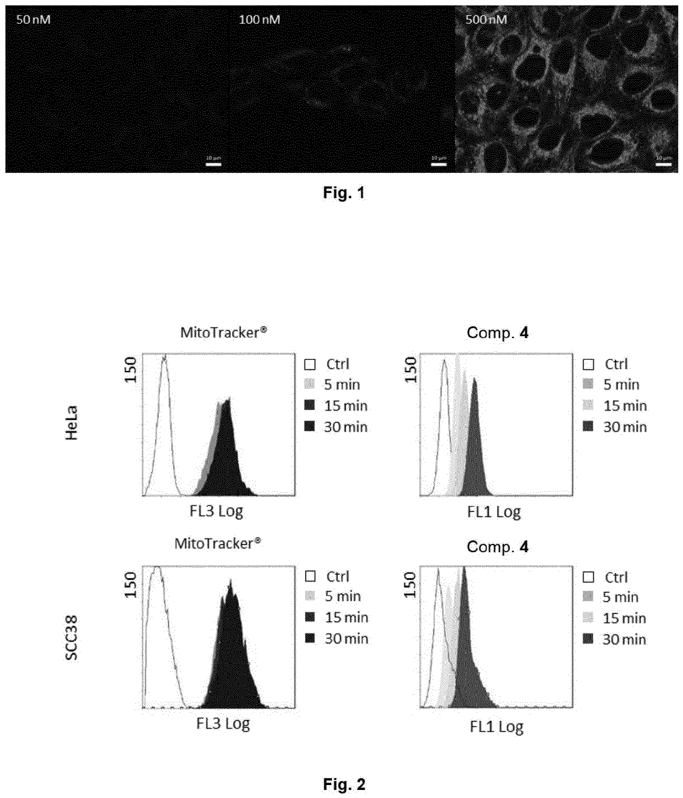

**Fig. 1****.** *In vivo* labeling of SCC38 cells with compound **4** at different concentrations (50, 100 and 500 nM). Scale bar: 10 µm
**Fig. 2****.** Flow cytometry studies in SCC38 and HeLa cell lines labeled with compound **4** and Mito Tracker® Red. Histograms wherein fluorescence intensity *vs* number of events is represented for each of the staining times (5, 15 and 30 min) and control (Ctrl), for the SCC38 and HeLa cells and for each of the two markers.

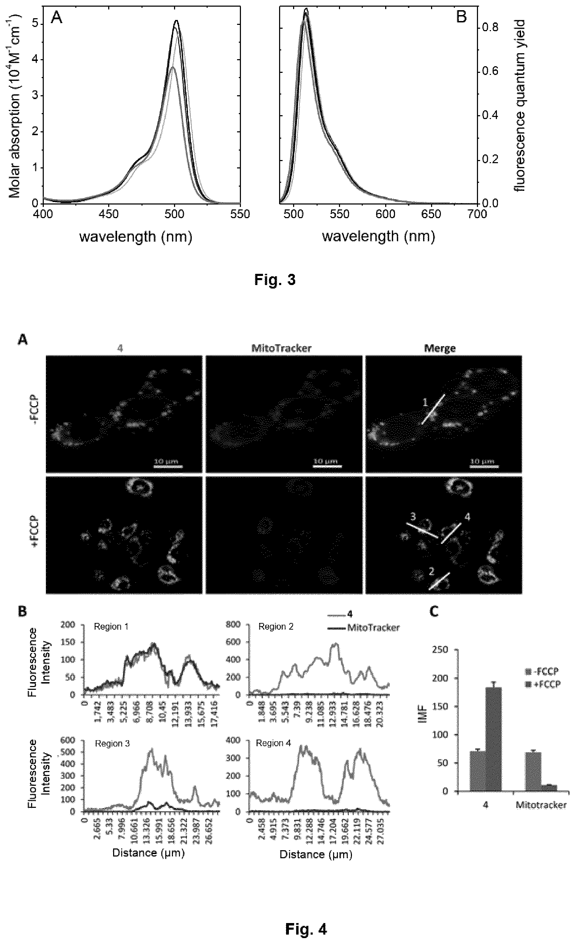

**Fig. 3****.** Absorption (A) and fluorescence (B) spectra, normalized to molar absorption and fluorescence quantum yield of probe **4** in different solvents; chloroform (green), acetone (black), acetonitrile (red), ethanol (blue) and water (gray).
**Fig. 4****.** Fluorescent labeling with probe **4** does not depend on ΔΨ_{m.} (A) Flow cytometry analysis of SCC38 cells incubated in the presence (+FCCP) or absence (-FCCP) of FCCP 60 µM for 3 h before staining with 20 nM of **4** or 0.5 nm of MitoTracker. The data represent the mean fluorescence intensity (MFI) of the stained cells. (B) Microscopy analysis of SCC38 cells pretreated or not with FCCP before co-staining with 20 nM of **4** and 0.5 nm of MitoTracker. The graphs show the fluorescence profiles of the regions of interest indicated with white lines in the right-hand panels. Scale bars: 10 µm).

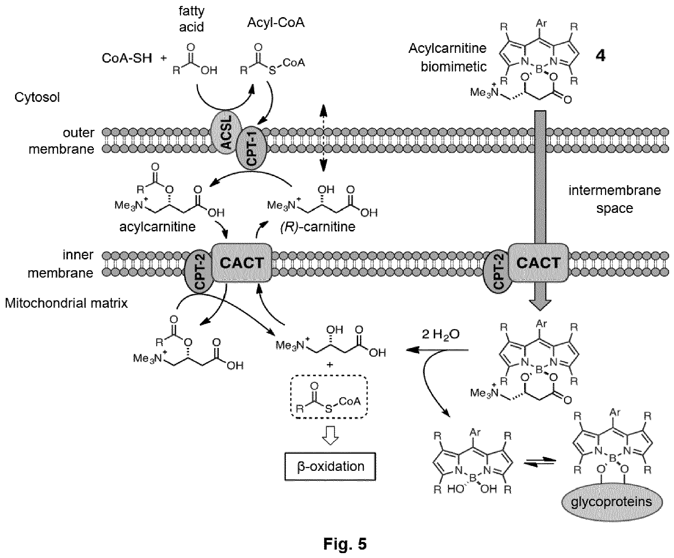

**Fig. 5****.** Mechanistic hypothesis of the transport (and final destination) of probe **4** to the mitochondrial matrix via the carnitine transport system.

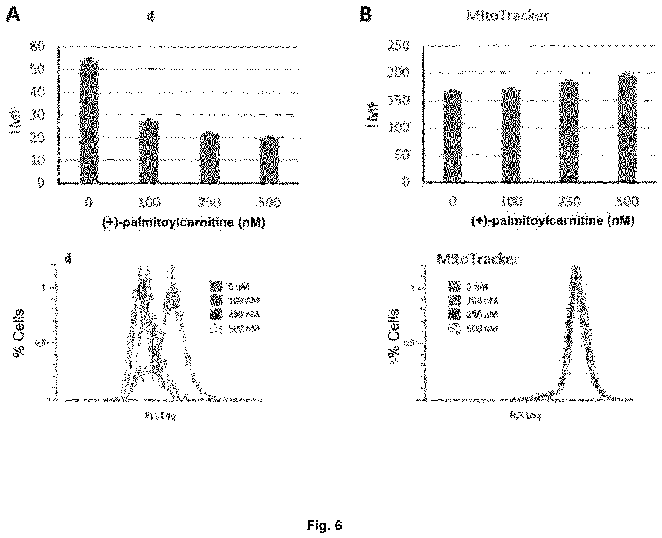

**Fig. 6****.** Inhibition of mitochondrial staining with compound **4** in the presence of growing concentrations of (*R*)-palmitoylcarnitine. The SCC38 cells were co-incubated with the indicated concentrations of (*R*)-palmitoylcarnitine and 50 nM of **4** (A) or 50 nM of MitoTracker (B) before analyzing by flow cytometry. The data represent the mean fluorescence intensity (MFI) of the stained cells (upper panels) and representative images of the cytometry profiles (lower panels).

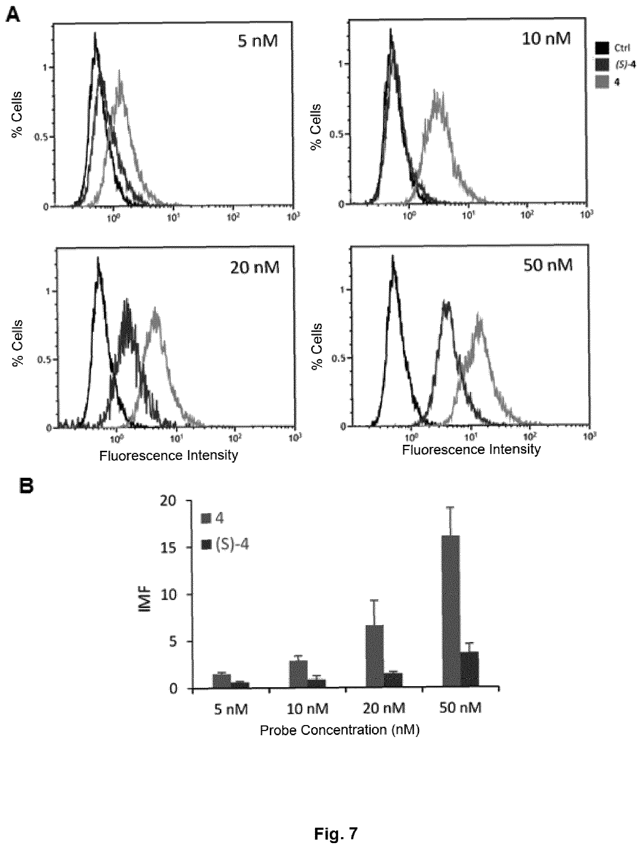

**Fig. 7****.** Flow cytometry analysis of SCC38 cells stained with **4** and its enantiomer (*S*)**-4** with growing concentrations of both probes. The SCC38 cells were incubated with the indicated concentrations of **4** and its enantiomer (*S*)**-4** for 30 min prior to the cytometry analysis. (A) Representative images of the cytometry profiles. (B) The data represent the mean fluorescence intensity (MFI) of the labeled cells.

### EXAMPLES

Next, the invention will be illustrated by means of assays carried out by the inventors describing the obtainment of the fluorescent probes of the invention and their assessment as mitochondrial markers in live tumor cells, which evidences the effectiveness of the compound of the invention by monitoring its activity both by fluorescence confocal microscopy and by flow cytometry.

### A. SYNTHESIS OF COMPOUNDS 3 AND 4

The general method for preparing these fluorescent probes derived from L-carnitine is based on the rational functionalization of the target molecule generically shown in diagram 1:

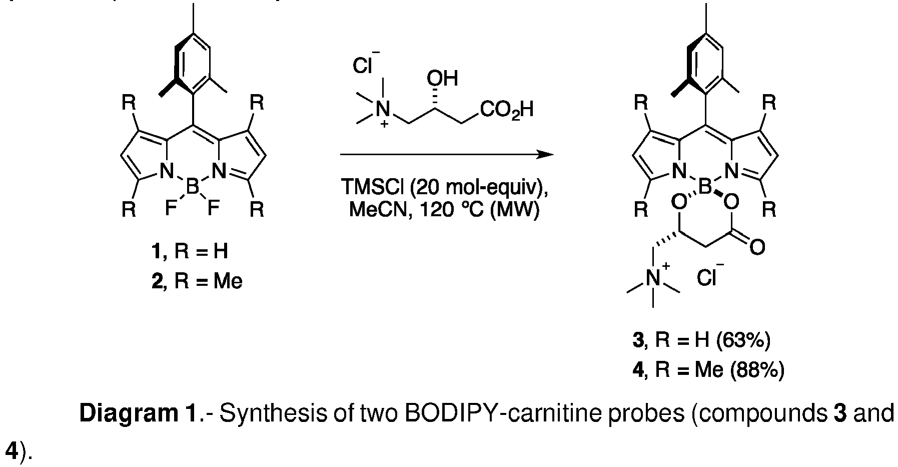

Through this synthesis, the carnitine is directly bonded to the boron atom of F-BODIPY in the form of B-spiro-derivative through the hydroxyl and carboxyl groups to generate the corresponding O-BODIPY derivative. Therefore, the synthesis process is simplified by avoiding fluorophore pre-functionalization processes or the introduction of connectors, thereby reducing the size and complexity of the final probe as much as possible. Although various methods of synthesizing O-BODIPYs from the corresponding F-BODIPYs in the present invention are known, the method described in Manzano, H. et al., Adv. Funct. Mater. 2016, 26, 2756 is assayed.

All the reagents used in the preparation of the foregoing compounds are commercial or were prepared following methods previously described in literature. Anhydrous solvents were treated using standard drying techniques or using the PureSol 400-3-MD model purification system to dry the following solvents (THF, CH₂Cl₂, MeCN, toluene, diethyl ether and DMF) and were immediately used in the reaction. Reactions under microwave (MW) irradiation were carried out in closed tubes in a Discover (CEM) or Monowave 300 (Anton Paar) focalized microwave reactor, using standard 10 mL Pyrex tubes closed with a cap septum. All the experiments were conducted at a maximum power of 300 W and a maximum pressure of 20 bar. The reactions were monitored by means of thin-layer chromatography (TLC) using aluminum-based silica gel 60 F254 (230-400 mesh) chromatofolios with 0.2 mm layer thickness (Merck). The TLC plates were viewed under a UV lamp 254/365 nm.

**Compound 3.** Compound **1** (30 mg, 0.097 mmol) and trimethylsilyl chloride (TMSCI) (491 µL, 3.87 mmol) were added to a suspension of L-carnitine hydrochloride (20 mg, 0.100 mmol) in anhydrous MeCN (5 mL) in a 10 mL microwave vial with a stirring bar (Nepomnyashchii, A. B.; et al., J. Am. Chem. Soc. 2011, 133, 8633). The reaction was heated with the following temperature gradient in a focalized microwave reactor: 25-80°C in 30 minutes, 80-100 °C in 5 minutes, 100°C for 30 minutes, 100-120 °C in 10 minutes, 120°C for 30 minutes and 120-150°C in 1 hour. The reaction mixture was evaporated at low pressure and the reaction crude was dissolved in a minimum quantity of CH₂Cl₂ and re-precipitated adding methyl tert-butyl ether, to give compound **3** (26.5 mg, 63%) as a red solid with green fluorescence in solution. 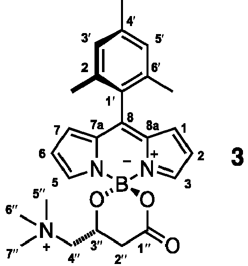 **¹H NMR (CDCl₃, 400 MHz):** δ = 8.14 (s, 1H, C5H), 7.83 (s, 1H, C3H), 6.95 (s, 2H, C3'H, C5'H), 6.70 (m, *J* = 4.15 Hz, 2H, C1 H, C7H), 6.49 (dd, *J* = 8.40, 4.15 Hz, 2H, C2H, C6H), 4.98 (t, *J* = 10.75 Hz, 1H, C3"H), 4.33 (d, *J* = 13.49 Hz, 1H, C4"H), 3.62 - 3.52 (m, 1H, C4"H), 3.41 (s, 9H, C5"H₃, C6"H₃, C7"H₃), 2.98 (d, *J* = 16.3 Hz, 1H, C2"H), 2.74-2.59 (m, 1H, C2"H), 2.36 (s, 3H, CH₃-C4'), 2.05 (s, 6H, CH₃-C2', CH₃-C6'). **¹³C NMR (101 MHz, CDC1₃):** δ= 168.80 (C1"), 148.00 (C8), 145.25 (C3), 144.45 (C5), 139.23 (C4'), 136.44 (C2'), 135.91 (C6'), 135.53 (C7a), 135.49 (C8a), 131.10 (C7H), 130.78 (C1), 129.54 (C1'), 128.51 (C3'), 128.34 (C5'), 119.20 (C6), 119.16 (C2), 69.53 (C4"), 63.06 (C3"), 55.01 (C5", C6", C7"), 36.95 (C2"), 21.28 (CH₃-C4'), 20.11 (CH₃-C2'), 20.04 (CH₃-C6'). **HRMS (ESl⁺) *m*/*z:*** calculated for C₂₅H₃₁BN₃O₃⁺ [M⁺]: 432.2453, finding 432.2453. **IR (KBr):** v = 1719.76 (C=O), 1560.24, 1411.23, 1383.73, 1257.88, 1108.77, 1070.62 cm⁻¹.

**Compound 4.** Compound **2** (32.3 mg, 0.088 mmol) and TMSCl (466 µL,, 3.67 mmol) were added to a suspension of L-carnitine hydrochloride (14.5 mg, 0.072 mmol) in anhydrous MeCN (5 mL) in a 10 mL microwave vial with a stirring bar (Kee, H. L.; et al., J. Phys. Chem. B 2005, 109, 20433). The reaction was heated with the following temperature gradient in a focalized microwave reactor: 25-80°C in 30 minutes, 80-100 °C in 5 minutes, 100°C for 30 minutes, 100-120°C in 10 minutes and 120ºC for 2 hours. The reaction mixture was evaporated at low pressure and the reaction crude was dissolved in a minimum quantity of CH₂Cl₂ and re-precipitated adding methyl tert-butyl ether, to give compound **4** (31.8 mg, 88%) as a red solid with green fluorescence in solution. 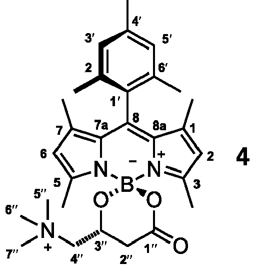 **¹H NMR (CDCl₃, 400 MHz):** δ = 6.97 (s, 1H, C3'H), 6.95 (s, 1H, C5'H), 5.99 (s, 1H, C6H), 5.97 (s, 1H, C2H), 4.55 (s, 1H, C3"H), 4.17 (s, 1H, C4"H), 3.32 (s, 9H, C5"H, C6"H, C7"H), 3.26 (s, 1H, C4"H), 2.87 (d, *J=* 14.45 Hz, 1H, C2"H), 2.54 (s, 3H, CH₃-C5), 2.47 (d, *J=* 14.45 Hz, 1H, C2"H), 2.39 (s, 3H, CH₃-C3), 2.34 (s, 3H, CH₃-C4'), 2.08 (s, 3H, CH₃-C2'), 1.98 (s, 3H, CH₃-C6'), 1.39 (s, 3H, CH₃-C7), 1.38 (s, 3H, CH₃-C1). **¹³C NMR (101 MHz, CDCl₃):** δ = 168.85 (C1 "), 155.71 (C3), 154.12 (C5), 143.83 (C8a), 143.52 (C7a), 142.52 (C8), 139.23 (C4'), 135.03 (C6'), 133.90 (C2'), 131.52 (C1), 131.39 (C7), 130.83 (C1'), 129.57 (C5'), 129.25 (C3'), 122.46 (C6), 122.43 (C2), 69.45 (C4",), 62.31 (C3"), 55.07 (C5", C6", C7"), 37.06 (C2"), 21.36 (CH₃-C4'), 19.76 (CH₃-C2'), 19.42 (CH₃-C6'), 17.39 (CH₃-C5), 15.67 (CH₃-C3), 13.85 (CH₃-C7), 13.72 (CH₃-C1). **HRMS (ESI⁺) *m*/*z:*** calculated for C₂₉H₃₉BN₃O₃⁺ [M⁺]: 488.3079, finding 488.3090. **IR (KBr):** v = 1720.45 (C=O), 1546.29, 1505.72, 1470.57, 1295.12, 1187.69, 1155.63, 1083.56, 1043.53, 982.88 cm⁻¹.

### B. Characterization of the new fluorescent probes (compounds 3 and 4) as mitochondrial markers

The cell assays were carried out on two human cell lines: SCC38 and HeLa. The SCC38 line is derived from human laryngeal epidermoid carcinoma patients, while HeLa, the first human cell line established in culture, is derived from cervical cancer. The culture medium used for both cell lines was DMEM (Dulbecco's Modified Eagle's Medium) supplemented with 10% of fetal bovine serum (FBS), 100 U/mL of penicillin, 200 µg/mL of streptomycin, 100 µmol/L of non-essential amino acids and 2 mmol/L of glutamine. The cultures were incubated at 37 ºC and 5% of CO₂.

These cell lines were stained with the fluorescent probes synthesized following the following protocol: 30,000-50,000 SCC38 cells were plated on 24-well glass-bottomed plates and cultured to 70% confluence. The culture medium was then removed from the well and washed at least three times with DMEM medium without additives. Next, 1 mL of DMEM and the corresponding fluorescent compound was added to the well. The cells were incubated at 37 ºC for 30 minutes, after which the medium was removed and newly washed with DMEM. Lastly, complete medium was added and the cells were observed under the microscope. Microscopy analysis was performed using a Zeiss Axio Observer Z1 microscope with AxioCam MRM and ApoTome 2 (Carl Zeiss, Germany) with different 40X 63X oil immersion objectives. The cells were also stained with MitoTracker® Red CMXRos (Thermo Fisher), following the manufacturer's instructions, with the aim of carrying out comparative studies with the new fluorescent markers synthesized herein. Initially, both compounds **3** and **4** were used at a concentration of 50 nM, and staining time was also 30 minutes.

By way of example, the behavior of compound **4** is described labeling SCC38 cells and analyzed by fluorescence cell microscopy. Fig. 1 shows labeling intensity in accordance with the dye concentration in the medium.

In order to confirm the specificity of the mitochondrial labeling, co-localization studies were carried out by co-staining with the commercial mitochondrial marker MitoTracker® Red in the cell line. Compound **4** was used at a concentration of 50 nM and MitoTracker® Red at 25 nM. Both compounds were added simultaneously and incubated for 30 minutes. The cells marked with both compounds were observed under both a Zeiss Axio Observer Z1 microscope and a Leica TCS SP8 X spectral confocal laser microscope (Scientific-Technical Services, Universidad de Oviedo).

In the case of simultaneous co-staining with both compounds, the cell microscopy studies revealed good co-localization of the two probes without interferences or cytotoxic effects. It should be noted that in many cases it was observed that the MitoTracker® Red stain was concentrated along the edges of the mitochondria, whereas the green stain of compound **4** was preferably located in its interior (the mitochondrial matrix).

The kinetics of cell labeling with **4** was studied by flow cytometry with the SCC38 and HeLa cell lines, using MitoTracker® Red as a control marker, both at a concentration of 50 nM. The staining times studied were 5, 15, 30 and 45 minutes. After staining, the medium was removed, washed with PBS, trypsinized and the pellet was resuspended in 500 µL of PBS and introduced in the cytometer after filtration. A Beckman Coulter Cytomics FC500 Flow Cytometry Analyzer was used (Scientific-Technical Services, Universidad de Oviedo). Part of the resuspended cells were also plated and observed under the microscope. As can be observed in Fig. 2, the staining with MitoTracker® Red barely varied upon increasing incubation time with the marker, whereas the labeling with compound **4** clearly increased in intensity with incubation time. A new cytometry experiment was conducted wherein a longer staining time was included (45 min), and wherein it could be observed that the labeling was even more intense than with a time of 30 minutes. This seems to indicate the action of an active transport mechanism of compound **4** in the mitochondria. Furthermore, in the co-staining experiments it was observed that the MitoTracker® Red seems to concentrate along the edges of the mitochondria, whereas the green stain of compound **4** is preferably located in its interior (the mitochondrial matrix). These findings would indicate that the internalization of probe **4**, as opposed to the commercial marker, implies the presence of an active transport mechanism of compound **4** in the mitochondria.

### C. Stability in water

One of the critical factors that conditions the viability and applicability of functional dyes **3** and **4** as fluorescent mitochondrial probes is their stability in water, since these compounds contain two potentially labile B-O bonds linking the fluorophore with the carnitine substituent. This stability was determined analyzing the time evolution of **3** and **4** in a 15 mM solution in D₂O at 25 ºC using ¹H NMR. This technique makes it possible not only to define their stability, but also to identify the possible degradation products (Diagram 2). Both probes are hydrolyzed, generating free carnitine and the corresponding 4,4-dihydroxy-BODIPY derivatives **5** and **6.**

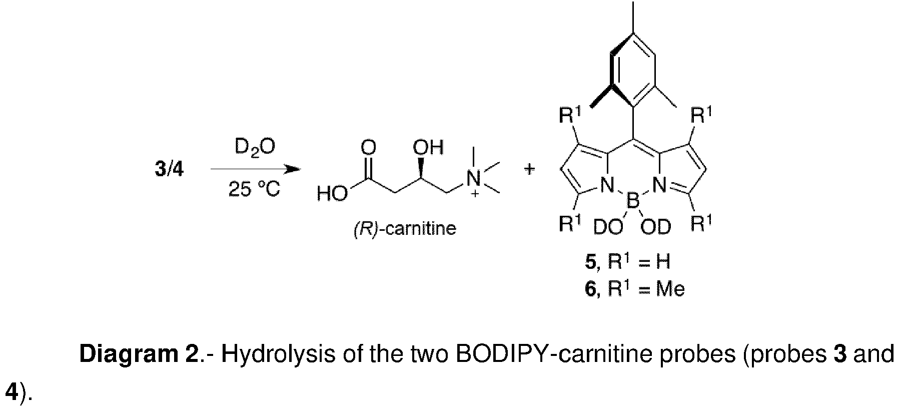

Compound **3** is quickly hydrolyzed (*t*_{1/2} = 10 min); however, the greater substitution of the tetramethylated derivative in 4 gives it greater stability (*t*_{1/2} = 6 h), which promotes its use as a fluorescent marker in live cells. Contrary to what might be believed, the generation of free carnitine and of the corresponding BODIPY derivatives **5** and **6** at physiological pH is, indeed, an advantage for its application in cell labels. Thus, (*R*)-carnitine is incorporated into the mitochondrial metabolism, while the boron of the hydrolyzed BODIPY can covalently bond to poly-hydroxilated molecules (for example, saccharides and glycoproteins), generating cyclic boronic esters. The reversible formation of these boronic esters will immobilize the probe inside the mitochondria, thereby preventing their diffusion outside of the cell organelle, even in those cases where the mitochondrial membrane potential has been eliminated.

### D. Photophysical characterization

The photophysical characterization of probes **3** and **4** was carried out analyzing the corresponding absorption and fluorescence spectra in the UV-visible region of the spectrum. In accordance with the spectral profiles and their dependence on concentration, these probes to not exhibit any tendency towards H- or J- type aggregation, even working at concentrations as high as 10⁻⁴ M. Since these probes have been designed as mitochondrial fluorescent markers, their photophysics was analyzed in water (Fig. 1).

Table 1 shows the photophysical^{a} properties of probe **3** in water and of probe **4** in different solvents.

**Table 1**

| **Probe** | **Solvent** | λ_{ab} (nm) | εₘₐₓ × 10⁴ (M⁻¹ cm^{- 1}) | λ_{fl} (nm) | Δv (cm⁻¹) | φ_{f} | τ (ns) | *k*_{fl} (10⁸s^{- 1}) | *k*ₙᵣ (10⁸s^{- 1}) |
|---|---|---|---|---|---|---|---|---|---|
| **3** | Water | 501 | 4.1 | 515 | 542 | 0.40 | 6.00 | 0.66 | 1.00 |
| **4** | Water | 499 | 3.8 | 511 | 470 | 0.83 | 7.30 | 1.14 | 0.23 |
| | Ethanol | 502 | 5.1 | 513 | 427 | 0.87 | 7.10 | 1.22 | 0.18 |
| | Acetonitrile | 500 | 4.9 | 512 | 469 | 0.86 | 7.12 | 1.21 | 0.20 |
| | Acetone | 501 | 5.1 | 514 | 504 | 0.89 | 7.00 | 1.27 | 0.16 |
| | Chloroform | 504 | 4.8 | 514 | 424 | 0.86 | 6.32 | 1.36 | 0.22 |

| | | | | | | | | | |
|---|---|---|---|---|---|---|---|---|---|
| ^{a}λ_{ab}: Absorption peak wavelength; ε: Molar extinction coefficient at the absorption peak; λ_{fl}: Fluorescence peak wavelength, upon excitation at 490 nm; Δv: Stokes shift; φ: Quantum yield using a solution of commercial BODIPY dye PM567 in ethanol as a reference; τ: Fluorescence lifetime; *k*_{fl}: Radiative decay constant; *k*ₙᵣ: Non-Radiative decay constant. | | | | | | | | | |

Its photophysical behavior is dependent on the degree of substitution of the BODIPY, since the alkylation of the chromatophore induces sufficient steric hindrance to reduce the free rotation of the 8-mesityl group, a process that entails a significant reduction in fluorescence efficiency. Thus, probe **4** in water stands out for having a high molar absorption coefficient (3.8 × 10⁴ M⁻¹ cm⁻¹ at 499 nm) and a very efficient fluorescence emission at 511 nm, with a quantum yield of up to 80%. Additionally, the rigid and compact structure of probe **4** determines that it is a highly efficient dye regardless of the solvent, since its photophysical behavior is similar upon significantly decreasing the polarity of the solvent, passing, for example, from water to chloroform (Figure 3).

It should be noted that probe **4** also has high photostability, which is a critical factor in the development of dyes for biological labeling. The hydrolysis of **4** observed by ¹H NMR does not entail a significant reduction in its fluorescence emission.

Table 2 shows the time evolution of the photophysical properties of probe **4** in water.

**Table 2**

| Time (hours:min) | λ_{ab} (nm) | εₘₐₓ (10⁴ M⁻¹ CM⁻¹) | λ_{fl} (nm) | φ | τ (ns) | *k*_{fl} (10⁸s⁻¹) | *k*ₙᵣ (10⁸s⁻¹) |
|---|---|---|---|---|---|---|---|
| 00:00 | 499 | 3.8 | 511 | 0.83 | 7.30 | 1.14 | 0.23 |
| 00:10 | 498 | 3.8 | 511 | 0.82 | 7.25 | 1.14 | 0.24 |
| 00:25 | 498 | 3.8 | 511 | 0.82 | 7.20 | 1.14 | 0.25 |
| 00:50 | 498 | 3.8 | 509 | 0.83 | 7.15 | 1.16 | 0.24 |
| 01:20 | 498 | 3.8 | 509 | 0.83 | 7.05 | 1.17 | 0.25 |
| 02:00 | 497 | 3.8 | 509 | 0.83 | 7.00 | 1.18 | 0.25 |
| 03:00 | 497 | 3.8 | 509 | 0.82 | 6.95 | 1.18 | 0.26 |
| 04:00 | 497 | 3.8 | 509 | 0.82 | 6.90 | 1.19 | 0.26 |
| 05:00 | 497 | 3.8 | 508 | 0.82 | 6.80 | 1.22 | 0.26 |
| 06:00 | 496 | 3.8 | 508 | 0.83 | 6.70 | 1.23 | 0.26 |
| 07:00 | 496 | 3.8 | 508 | 0.83 | 6.65 | 1.24 | 0.26 |
| 24:00 | 496 | 3.7 | 507 | 0.65 | 6.50 | 1.03 | 0.54 |

Indeed, the fluorescence yield remains constant for 7 hours. However, due to the oligomerization of hydrolysis product **6** and to the ensuing precipitation of the resulting oligomers, fluorescence efficiency gradually decreases in 24 hours, although it maintains a quantum yield of 65%. Based on these results, it can be concluded that the hydrolysis of the dye does not significantly affect its fluorescent behavior and, additionally, its capacity to covalently bond to the mitochondrial proteins prevents the subsequent release and potential diffusion, secretion or unwanted metabolism thereof. Indeed, the diffusion of the dye outside of the cell organelle, which occurs in dyes not covalently bonded thereto, is one of the main problems in the development of fluorescent biological markers because it entails a significant reduction in fluorescent efficiency and, thus, in the accuracy and reproducibility of the experiments. The rational design of probe **4** must, therefore, prevent this loss of fluorescence signal and improve the quality and accuracy of the measurements, thereby enhancing its applicability as a biological probe.

### E. Impact of mitochondrial membrane potential on the subcellular distribution of 4

The labeling was analyzed by flow cytometry in the presence of carbonyl cyanide-*p*-(trifluoromethoxy)phenylhydrazone (FCCP), a protonophore used to reduce the mitochondrial membrane potential (ΔΨₘ) through depolarization of the mitochondrial membrane. The cells treated with FCCP (60 µM FCCP for 3 h, at 37 ºC) exhibited highly attenuated mitochondrial fluorescence after being incubated with MitoTracker Red, a fluorescent probe dependent on ΔΨₘ. However, the same cells incubated with probe **4** not only exhibited an increase in fluorescence with reduced potential ΔΨₘ, but are also capable of labeling depolarized mitochondria (Fig. 4). Indeed, the suppression of dye-mitochondria electrostatic attraction as a passive labeling mechanism reduces the concentration of the dye in the cell organelle and, thus, the probability and extent of the fluorescence deactivation processes, with the ensuing increase in their efficiency. These results substantiate the conclusion that the new probe **4** is internalized in the mitochondria via an active transport system, regardless of the membrane potential, as opposed to MitoTracker Red and similar cationic dyes that are rapidly absorbed into this negatively charged organelle through a passive mechanism based on its electrostatic attraction. A potential transporter of **4** is the carnitine system (CS), which channels the fatty acids through the mitochondrial membranes towards the internal mitochondrial matrix, where they are converted into β-oxidation substrates (Figure 5). The fatty acids are firstly activated by the acyl-CoA synthetase (ACSL) in the cytosol to acyl-CoA thioesters, which penetrate the outer mitochondrial membrane through the voltage-dependent anion channel (VDAC), but do not penetrate the inner mitochondrial membrane due to the lack of a specific transporter. The acyl-CoA fatty acid derivatives are trans-esterified to acylcarnitines by the carnitine palmitoyltransferase-1a (CPT-1a), an integral outer mitochondrial membrane enzyme, and are then released into the intermembrane space. The acylcarnitines are translocated across the inner mitochondrial membrane by the carnitine/acylcarnitine translocase (CACT), which mediates an antiport reaction allowing entry of acylcarnitines into the mitochondrial matrix and exit of free carnitine. Lastly, the enzyme carnitine palmitoyltransferase-2 (CPT-2) catalyzes the trans-esterification of the acyl group from carnitine to CoA in the mitochondrial matrix, providing the substrates for β-oxidation. The transport function of CACT is crucial for the β-oxidation pathway.

Due to the lipophilic nature of the BODIPY subunit, probe **4** can be reasonably regarded as a biomimetic of acylcarnitines, being thus able to travel through the carnitine transport system in their place. To test if CACT was in fact involved in the channeling of **4** to the mitochondrial matrix, we firstly studied the effect of (*R*)-(+)-palmitoylcarnitine, a natural CACT substrate, in cell labeling by **4.** Flow cytometry analysis of live SCC38 cells co-incubated with **4** (50 nm) and increasing concentrations of (*R*)-palmitoylcarnitine (100, 250 and 500 nM) show a concentration-dependent reduction of fluorescence intensity (Figure 6). In contrast, only a slight increase of fluorescence was observed in the case of MitoTracker Red under the same experimental conditions (Figure 6).

These experiments imply the participation of CACT in the active transport of **4** in mitochondria. In order to further support this conclusion, the stereospecificity of the mitochondrial labeling was also studied, comparing the resulting staining of **4** and its enantiomer (*S*)-**4** under identical experimental conditions. Flow cytometry analysis of the staining experiments at all the selected concentrations revealed that fluorescence intensity was considerably lower when the SCC38 cells were charged with (*S*)-**4**, which contains the unnatural (*S)-*carnitine enantiomer, than when they were marked with **4.** The activities observed are parallel to the known stereospecificities shown by CACT for the corresponding enantiomeric palmitoylcarnitines (Figure 7). In general, these observations corroborate the opinion that **4** is a CACT substrate which actively channels the probe through the inner mitochondrial membrane into the matrix, wherein it is hydrolyzed to carnitine and to the boronic acid derivative **6.** Carnitine is thus transported back from the matrix to the cytosol by CACT, whereas **6** will likely be retained in the matrix by covalent complexing to glycoproteins.

## Claims

1. A compound of general formula (I) 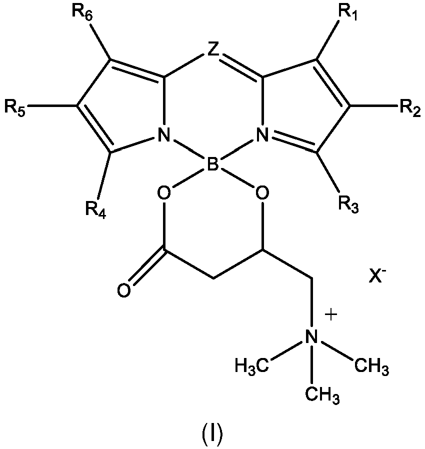 wherein:
Z is selected from a N or a C(R₇) group;
R₁ to R₇ are each independently selected from hydrogen, substituted or non-substituted C₁-C₁₈ alkyl, substituted or non-substituted C₂-C₁₈ alkenyl, substituted or non-substituted C₂-C₁₈ alkynyl, substituted or non-substituted aryl, substituted or non-substituted heteroaryl, halogen, -OR', -COOR', -SR', -SOR', -SOOR' and -NR'R"; or every two radicals R₁ to R₇ form a cycloalkyl, aryl or heteroaryl;
R' and R" are each selected independently from hydrogen, C₁-C₁₈ alkyl, C₂-C₁₈ alkenyl, C₂-C₁₈ alkynyl, aryl or heteroaryl; and
x- is a counterion,
or any of the isomers thereof.

2. The compound, according to claim 1, wherein Z is C(R₇).

3. The compound, according to any of claims 1 or 2, wherein R₇ is an optionally substituted aryl.

4. The compound, according to claim 3, wherein R₇ is a trimethylphenyl.

5. The compound, according to any of claims 1 to 4, wherein R₂ and/or R₅ are hydrogen.

6. The compound, according to any of claims 1 to 5, wherein R₁, R₃, R₄ and R₆ are each independently hydrogen or methyl.

7. The compound, according to any of claims 1 to 6, wherein R₁, R₃, R₄ and R₆ are hydrogen or methyl.

8. The compound, according to any of claims 1 to 7, wherein X⁻ is selected from a halide, SO₄⁻, BF₄⁻, PF₄⁻, HSO₄⁻ and (SO₄²⁻)_{1/2}.

9. The compound, according to any of claims 1 to 8, wherein X⁻ is Cl⁻.

10. The compound, according to claim 1, wherein the compound is selected from:

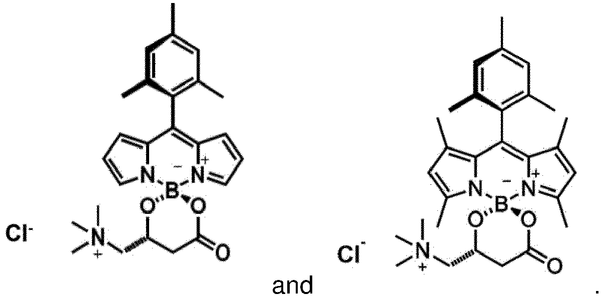

11. A method for obtaining the compound of formula (I), described according to any of claims 1 to 10, which comprises the reaction of a compound of formula (III) with carnitine: 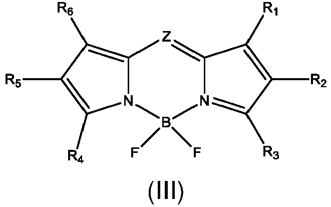 wherein: Z and R₁ to R₆ are those defined in any of claims 1 to 7.

12. Use of the compound, according to any of claims 1 to 10, as a fluorescent marker or probe.

13. Use, according to claim 12, for cell labeling.

14. Use, according to claim 13, for mitochondrial cell labeling.

15. Use, according to claim 14, in live cells.

16. Use of the compound, according to any of claims 1 to 10, for manufacturing markers for diagnosing mitochondrial diseases.

17. Use, according to claim 16, wherein the mitochondrial diseases are selected from carnitine-acylcarnitine translocase deficiency, childhood metabolic imbalance, childhood cardiomyopathy, adult fatiguability, metabolic disorders, cancer, type-2 diabetes, neurological diseases and cardiovascular diseases.
